(19) Europäisches Patentamt
European Patent Office
Office européen des brevets

(11) **EP 3 121 791 B1**

(12) **EUROPEAN PATENT SPECIFICATION**

(45) Date of publication and mention
of the grant of the patent:
**04.09.2019  Bulletin 2019/36**

(51) Int Cl.:
***G06T 7/20*** *(2017.01)*

(21) Application number: **16180340.8**

(22) Date of filing: **20.07.2016**

(54) **METHOD AND SYSTEM FOR TRACKING OBJECTS**

VERFAHREN UND SYSTEM ZUR VERFOLGUNG VON OBJEKTEN

PROCÉDÉ ET SYSTÈME DE SUIVI D'OBJETS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **24.07.2015  CN 201510441652**

(43) Date of publication of application:
**25.01.2017  Bulletin 2017/04**

(73) Proprietor: **Ricoh Company, Ltd.
Tokyo 143-8555 (JP)**

(72) Inventors:
• **LIU, Dianchao
Haidian District, Beijing 100044 (CN)**
• **SHI, Zhongchao
Haidian District, Beijing 100044 (CN)**
• **LU, Yaojie
Haidian District, Beijing 100044 (CN)**
• **REN, Jie
Haidian District, Beijing 100044 (CN)**
• **CHEN, Chao
Haidian District, Beijing 100044 (CN)**

(74) Representative: **White, Duncan Rohan
Marks & Clerk LLP
Fletcher House (2nd Floor)
Heatley Road
The Oxford Science Park
Oxford OX4 4GE (GB)**

(56) References cited:
**US-A1- 2007 133 840     US-A1- 2011 052 003**

• **XIAOGANG WANG ET AL: "Learning Semantic
Scene Models by Trajectory Analysis", 2006,
COMPUTER VISION - ECCV 2006 LECTURE
NOTES IN COMPUTER SCIENCE;;LNCS,
SPRINGER, BERLIN, DE, PAGE(S) 110 - 123,
XP019036528, ISBN: 978-3-540-33836-9 *
abstract, sections 2-5, Fig. 2 ***
• **CHAN KAI-CHI ET AL: "Collaborative object
tracking with motion similarity measure", 2013
IEEE INTERNATIONAL CONFERENCE ON
ROBOTICS AND BIOMIMETICS (ROBIO), IEEE, 12
December 2013 (2013-12-12), pages 964-969,
XP032579709, DOI: 10.1109/ROBIO.2013.6739588
[retrieved on 2014-02-12]**
• **BANERJEE P ET AL: "Model generation for
robust object tracking based on temporally stable
regions", MOTION AND VIDEO COMPUTING,
2008. WMVC 2008. IEEE WORKSHOP ON, IEEE,
PISCATAWAY, NJ, USA, 8 January 2008
(2008-01-08), pages 1-6, XP031273525, ISBN:
978-1-4244-2000-1**

# EP 3 121 791 B1

**Description**

## BACKGROUND OF THE INVENTION

### 1. Field of the Invention

The present invention generally relates to the field of image processing and computer vision, and specifically, relates to a method and an apparatus for tracking objects.

### 2. Description of the Related Art

Tracking of a moving object is a very important and active research subject in the field of computer vision, digital video, image processing and pattern recognition.

Moving object tracking may be performed based on moving object detection. There are many technologies of moving object detection. For example, according to the basic principle of algorithm, the existing methods for detecting a moving object may be classified into three types, namely an inter-frame difference method, a background removal method and an optical flow method. In the moving object tracking, detection for the moving object may be performed in a current frame within a certain range around a previously detected object, and it may be determined that the moving object is tracked if the moving object is detected.

The moving object detection is usually performed in continuous frames of images photographed by a camera, even continuous frames of stereo images photographed by a binocular camera. If a tracker equipped with the camera is also moving, the moving object tracking may be affected by the moving of the tracker itself, which is equipped with the camera. Furthermore, if there are a plurality of moving objects, the moving object tracking may also be affected by interference such as shielding of another moving object.

Accordingly, there is a need to provide a technology of rapidly and accurately tracking a moving object.

US 2011/052003 A1 discloses techniques for detecting foreground objects in a scene captured by a surveillance system and tracking the detected foreground objects from frame to frame in real time.

US 2007/133840 A1 discloses a method for tracking moving objects from data by tracking a cluster of resilient features of the target.

XIAOGANG WANG ET AL: "Learning Semantic Scene Models by Trajectory Analysis", 2006, COMPUTER VISION - ECCV 200 LECTURE NOTES IN COMPUTER SCIENCE; LNCS SPRINGER, BERLIN, DE, pages 110-123, XP019036528, ISBN: 978-3-540-33836-9 discloses an unsupervised learning framework to segment a scene into semantic regions and to build semantic scene models from long term observations of moving objects in the scene.

CHAN KAI-CHI ET AL: "Collaborative Object Tracking with Motion Similarity Measure", 2013, IEEE INTERNATIONAL CONFERENCE ON ROBOTICS AND BIOMIMETICS (ROBIO), IEEE, 12 December 2013, pages 964-969, XP032579709, DOI:10.1109/ROBIO.2013.6739588 discloses an approach to tracking objects using motion similarity measure for pairs of objects, with an emphasis on collaborative tracking.

BANERJEE P ET AL: "Model Generation for Robust Object Tracking Based on Temporally Stable Regions", MOTION AND VIDEO COMPUTING, 2008. WMVC 2008. IEE WORKSHOP ON, IEE, PISCATAWAY, NJ, USA, 8 January 2008, pages 1-6, XP03123525, ISBN: 98-1-4244-2000-1 discloses a novel way to build object models based on motion information extracted from video sequences.

## SUMMARY OF THE INVENTION

The invention is set out in the accompanying claims.

## BRIEF DESCRIPTION OF THE DRAWINGS

FIG. 1 is a schematic drawing illustrating a scenario where the present technology is applied;
FIG. 2 is a flowchart illustrating an object tracking method according to an embodiment of the present invention;
FIG. 3 is a flowchart illustrating a general tracking algorithm for tracking a high-priority object;
FIG. 4 is a flowchart illustrating an example of a process of step 201 of the object tracking method according to the embodiment of the present invention;
FIG. 5 is a flowchart illustrating an example of a process of step 202 of the object tracking method according to the embodiment of the present invention;
FIG. 6 is a schematic drawing illustrating an example of coexistence information between the high-priority objects;

FIG. 7 is a block diagram illustrating an object tracking apparatus according to another embodiment of the present invention; and

FIG. 8 is a block diagram illustrating an example of a computer system or a server 12 for implementing the embodiments of the present invention.

## DETAILED DESCRIPTION OF THE PREFERRED EMBODIMENTS

In the following, specific embodiments of the present invention will be described in detail with reference to the accompanying drawings. Although the present invention will be described with reference to the specific embodiments, the present invention is not limited to the embodiments. Furthermore, the present invention includes various modifications, amendments or equivalents that are made without departing from the scope of the present invention as defined by the appended claims. It should be noted that, steps in the method may be implemented by any functional blocks or functional layouts, and the functional blocks or the functional layouts may be implemented as physical entities, logical entities, or combination thereof.

In the following, the present invention will be described in detail with reference to the accompanying drawings and the specific embodiments, so as to facilitate the understanding of the present invention.

It should be noted that, the examples that will be described below are just specific examples, and embodiments of the present invention are not limited to specific steps, values, conditions, data and orders below. A person skilled in the art may construct another embodiment, which is not mentioned in the specification, by reading the specification and applying concepts of the present invention.

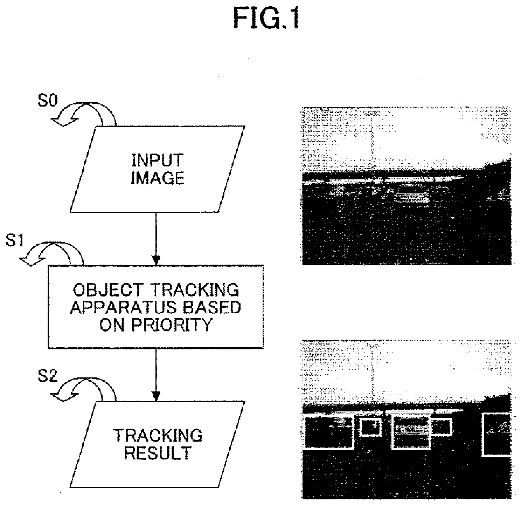

FIG. 1 is a schematic drawing illustrating a scenario where the present technology is applied.

In step S0, objects to be tracked are inputted (as shown in the upper right drawing of FIG. 1); in step S1, an apparatus performs an object tracking method based on priority; and in step S2, the apparatus outputs a tracking result (as shown by the rectangular box in the lower right drawing in FIG. 1). In FIG. 1, a plurality of tracking object are tracked at the same time.

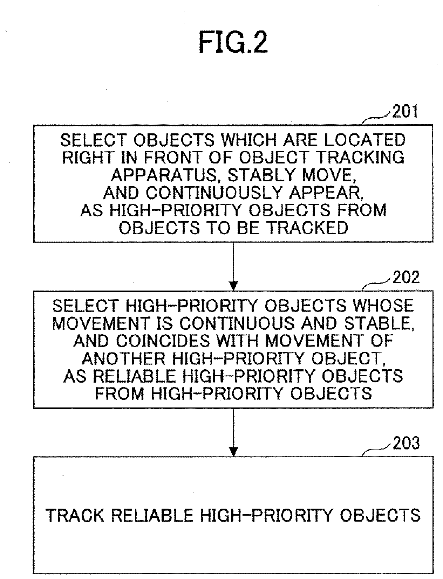

FIG. 2 is a flowchart illustrating an object tracking method according to an embodiment of the present invention.

The object tracking method includes step 201, selecting, objects which are located right in front of an object tracking apparatus, stably move, and continuously appear, as high-priority objects from the objects to be tracked; step 202, selecting high-priority objects whose movement is continuous and stable, and coincides with movement of another high-priority object, as reliable high-priority objects from the high-priority objects; and step 203, tracking the reliable high-priority objects.

It should be noted that, there are various kinds of definition of priority, and different tracking methods and/or apparatuses may have different definitions of priority. In the method and/or the apparatus of the present invention, in an example of an application of an in-vehicle visual recognition system, for example, in a road scenario, nearby vehicles, pedestrian objects, or vehicle objects which are located right in front of a tracker, stably move, and continuously appear, may be regarded as the high-priority objects. Furthermore, for example, vehicle objects which are located at a middle or long distance and unstably move, shielded objects at a long distance, or objects that just appear in a screen may be regarded as non-high-priority objects.

However, the high-priority objects which are located right in front of the tracker, stably move, and continuously appear may become unstably moved and/or separated from a movement track of another high-priority object as time passed thereby becoming unreliable high-priority objects. Thus, such unreliable high-priority objects cannot be determined as stable tracking objects, since the movement of such objects is unstable and independent. On the other hand, for the reliable high-priority objects whose movement is continuous and stable, and basically coincides with movement track of another high-priority object as time has passed (for example, a relative distance, a relative angle, and/or a relative movement velocity basically remain unchanged), a stable tracking result can be obtained when continuously tracking the reliable high-priority objects. Thus, in the present method, an accurate and stable tracking result can be obtained by determining the high-priority objects and the reliable high-priority objects.

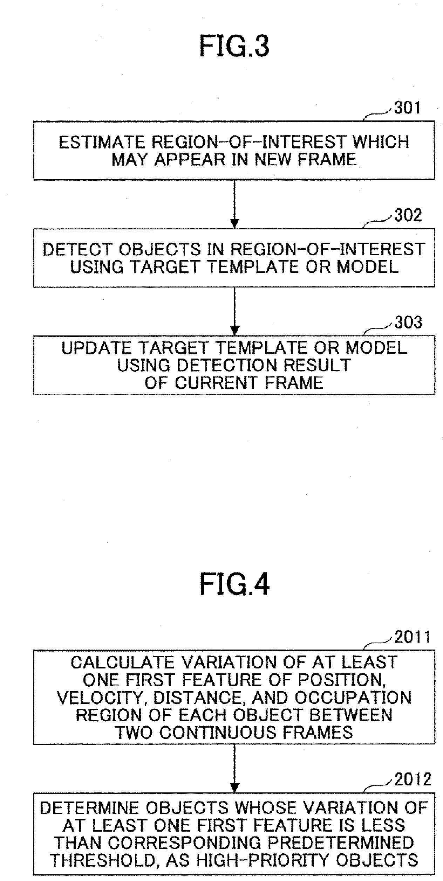

FIG. 3 is a flowchart illustrating a general tracking algorithm for tracking a high-priority object.

FIG. 3 is also a flowchart of a general tracking algorithm of general object tracking. As shown in FIG. 3, in step 301, estimate a region-of-interest which may appear in a new frame, using historical movement information of the objects and other auxiliary information; in step 302, detecting the objects in the region-of-interest using an existing object template or model; and in step 303, updating the object model using a detection result of a current frame. The object tracking method is also a general tracking method based on detection, which may be used for high-priority objects, reliable high-priority objects, and non-high-priority objects, and the present invention is not limited to such an object tracking method.

Here, a tracking algorithm performed for the tracking object may use existing algorithms, such as an inter-frame difference method, a background removal method and an optical flow method, and the descriptions of these methods are omitted here.

FIG. 4 is a flowchart illustrating an example of a process of step 201 of the object tracking method according to the embodiment of the present invention.

In the embodiment, step 201, namely selecting the objects which are located right in front of the object tracking apparatus, stably move, and continuously appear, as the high-priority objects from the objects to be tracked may include step 2011, calculating a variation of at least one first feature of a position, a velocity, a distance, and an occupation region of each object between two continuous frames; and step 2012, determining the objects whose variation of the at least one first feature is less than a corresponding predetermined threshold, as the high-priority objects.

Here, the first feature may include a spatial position, a movement velocity, a distance from the tracker (namely, a distance from a camera installed in the tracker), and/or an occupation region in an image photographed by the camera (for example, a front region in a height-width plane); however, the first feature is not limited to the above features, and for example, may include a movement velocity only in a depth direction (namely a forward speed), a depth distance in the depth direction, a position in the height-width plane (namely a front position) and the like.

Moreover, for an initialized tracking object, such an object may be set as a non-high-priority (or low-priority) object, since such an object belongs to a new object and the priority state of such an object cannot be analyzed using historical data. As capture and tracking are continuously performed for continuous frames, an analysis may be performed for a variation of at least one first feature of a position, a velocity, a distance, and an occupation region of the tracking object between two (or among three or more) continuous (or discontinuous) frames. If the variation is relatively small, it means that the position, the velocity, the distance and/or the occupation region of the tracking object is basically unchanged, namely stable; accordingly, the object may be initially selected as the high-priority object.

In this way, according to the method and/or the apparatus, the high-priority objects can be evaluated and state conversion between high-priority and non-high-priority can be performed based on a real-time tracking result.

It should be noted that, the high-priority objects may be not selected in real time by the first feature based on the real-time tracking result, and the high-priority objects may also be artificially, randomly, or previously and automatically set. Here, description thereof is omitted.

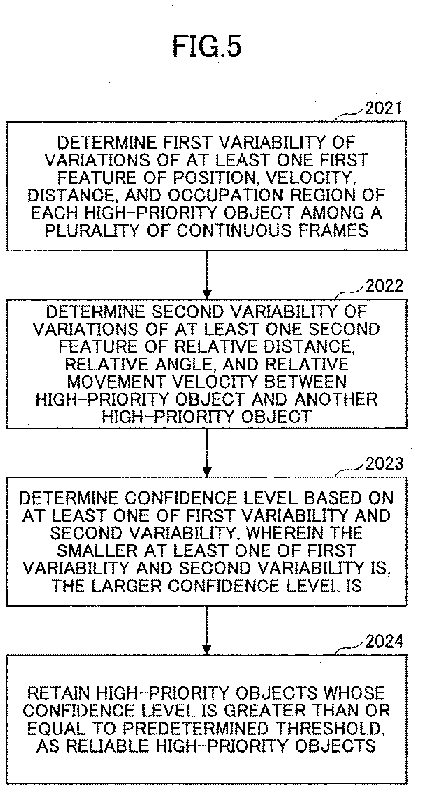

FIG. 5 is a flowchart illustrating an example of a process of step 202 of the object tracking method according to the embodiment of the present invention.

In the embodiment, step 202, selecting the high-priority objects whose movement is continuous and stable, and coincides with movement of another high-priority object, as the reliable high-priority objects from the high-priority objects may include step 2021 determining first variability of variations of at least one first feature of a position, a velocity, a distance, and an occupation region of each high-priority object among a plurality of continuous frames; step 2022, determining second variability of variations of at least one second feature of a relative distance, a relative angle, and a relative movement velocity between the high-priority object and another high-priority object; step 2023, determining a confidence level based on at least one of the first variability and the second variability; and step 2024, retaining the high-priority objects whose confidence level is greater than or equal to a predetermined threshold, as the reliable high-priority objects. In step 2023, the smaller the at least one of the first variability and the second variability is, the larger the confidence level is.

The confidence levels of the high-priority objects are high; thus movement information of the camera installed in the tracker can be estimated by using the result of the high-priority objects, thereby helping objects with another priority perform detection and tracking.

However, the high-priority objects may become unstably moved and/or separated from a movement track of another high-priority object as time passes thereby becoming unreliable high-priority objects. Thus, such unreliable high-priority objects cannot be determined as stable tracking objects, since the movement of such objects is unstable and independent. On the other hand, for the reliable high-priority objects whose movement is continuous and stable, and basically coincides with movement track of another high-priority object as time passed (for example, a relative distance, a relative angle, and/or a relative movement velocity basically remain unchanged), a stable tracking result can be obtained when continuously tracking the reliable high-priority objects.

Accordingly, own historical information (such as the at least one first feature of the position, the velocity, the distance, and the occupation region) and coexistence information between objects of a current frame (such as the at least one second feature of the relative distance, the relative angle, and the relative movement velocity between the object and another object) may be used to calculate a state confidence level of each high-priority object.

The confidence level of each high-priority object may be evaluated and calculated based on two aspects, i.e., time domain information based on own history, and spatial domain information based on coexistence relationship between the high-priority object and another high-priority object. That is to say, the own historical information may include the first feature such as the position, the velocity, the distance, and/or the occupation region; and the spatial domain information based on the coexistence relationship between the high-priority object and another high-priority object may include the second feature such as the relative distance, the relative angle, and/or the relative movement velocity between the object and another object. Furthermore, it should be noted that, a historical movement variation state of the object and a relative variation state of the object with respect to another object are estimated by mainly considering variability of variations of the first feature such as the position, the velocity, the distance, and/or the occupation region, and variability of variations of the second feature such as the relative distance, the relative angle, and/or the relative movement velocity between the object and another object.

In an example of the occupation region, it is assumed that the variation of the occupation region of the high-priority object in the mth frame with respect to the (m-1)th frame is r(m). As described above, the occupation region is a front region in a height-width plane. The variation of the occupation region may be measured using, for example an overlapping ratio, where the overlapping ratio means a ratio of a commonly overlapping portion between an object position of the mth frame and an object position of the (m-1)th frame to a total object area, and the larger the overlapping ratio is, the smaller the variation of the occupation region is. For example, the variation of the occupation region may be defined as, (1 - the overlapping ratio), 1 / the overlapping ratio, or the like. Accordingly, in a sequence of historical continuous frames (such as the nth frame, the (n-1)th frame, ...... the second frame), a sequence of the variations of the occupation regions of the object may be represented as follows.

$$R = \{r(n), r(n-1), \ldots r(2)\} \qquad \text{formula (1)}$$

And then, a first confidence level based on the own historical information P_confidence_self may be represented by the following formula.

$$P\_confidence\_self = a \times exp(variance(R)) \qquad \text{formula (2)}$$

Or

$$P\_confidence\_self = b \times mean(R) / max(R) \qquad \text{formula (3)}$$

Here, a and b are weighting coefficients. Variance(R) is variance (mathematical concept) of R. Variance(R) or max(R)/mean(R) (the reciprocal of mean(R)/max(R) in formula (3)) may represent the first variability of the variations of the at least one first feature of the position, the velocity, the distance, and the occupation region of the high-priority object among a plurality of the continuous frames. The first confidence level P_confidence_self is in inversely proportional relationship to the first variability variance(R) or max(R)/mean(R); namely, the smaller the first variability is, the larger the first confidence level is. For example, in formula (2), the smaller variance(R) is, the larger exp(variance(R)) is, and the larger a x exp(variance(R)) is. As another example, in formula (3), the smaller max(R) / mean(R) is, the larger mean(R) / max(R) is, and the larger b x mean(R) / max(R) is.

It should be noted that, according to the principle of variability, a formula other than above formulas (2) and (3) may also be constructed to represent the variability of the variances of the first feature among the continuous frames (for example, using a multi-order variance (mathematical concept)), and a confidence level that is inversely proportional to the variability.

Additionally, although the first confidence level is calculated using only one first feature (such as the occupation region) here, the confidence level may also be calculated using another first feature (such as one or more first features of the position, the velocity and the distance). For example, if the variances of the positions between the high-priority objects A, B, C, D and corresponding positions of a previous frame are 10, 9, 12 and 50, respectively, the object D may be a unreliable high-priority object, and the objects A, B and C may be reliable high-priority objects. In addition, a sum, a weighted value or an average value of the first confidence levels of the first features may be calculated to obtain an overall confidence level.

Regarding the second confidence level calculated based on the spatial domain information of the coexistence relationship between the high-priority object and another high-priority object, the evaluation condition may include the second feature such as the relative distance d, the relative angle I, and/or the relative movement velocity m. Here, the relative distance may include a spatial distance, and a distance in a specific direction between two objects; and the relative angle may include an included angle between orientations of two objects. The relative movement velocity may include, for example, a relative movement velocity in a specific direction between two objects. The calculation methods of these features may be realized by known methods, and the descriptions thereof are omitted here.

For the spatial domain information of the coexistence relationship between the high-priority object and another high-priority object, correlation Cov(AB) for indicating a set of the variances of all of the above coexistence relationship features (namely the second features) between object A and object B (the set may include variations of one or more second feature of relative distance d, relative angle I, and the relative movement velocity m) may be defined.

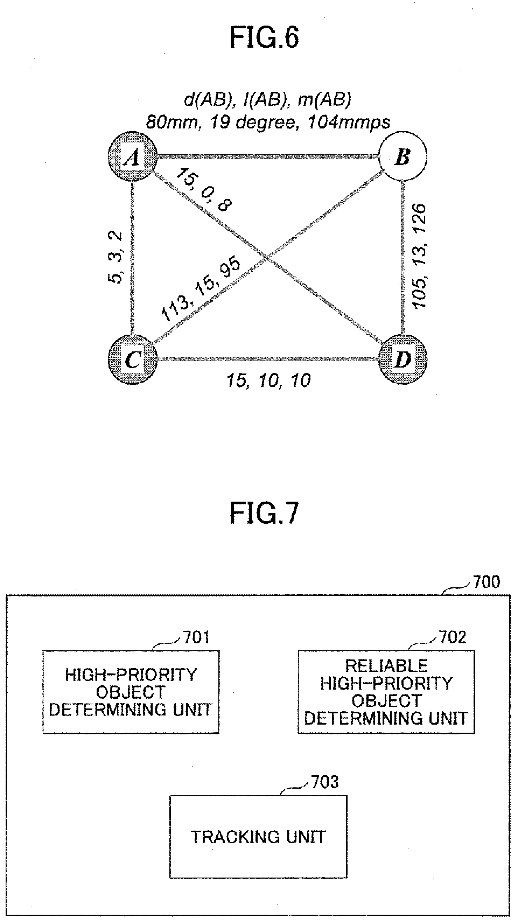

FIG. 6 is a schematic drawing illustrating an example of coexistence information between the high-priority objects.

As shown in FIG. 6, it is assumed that there are four high-priority objects A, B, C and D, and all of the three second features of relative distance d, relative angle I and relative movement velocity m are considered. For example, the correlation between object A and object B may be represented that Cov(AB) is equal to [80, 19, 104]. Specifically, it means that the variance of relative distance D between object A and object B is 80 mm, the variance of relative angle I between object A and object B is 19 degrees, and the variance of relative movement velocity m between object A and object B is 104 mmps (or mm/s).

Similarly, the correlation Cov(AC) between object A and object C is equal to [5, 3, 2]; the correlation Cov(AD) between object A and object D is equal to [15, 0, 8]; the correlation Cov(BD) between object B and object D is equal to [105, 13, 126]; the correlation Cov(BC) between object B and object C is equal to [113, 15, 95]; and the correlation Cov(CD) between object C and object D is equal to [15, 10, 10].

It should be noted that, as a specific example of calculation, the calculation may also be performed by normalizing different feature values. By comparing the above correlation, it can be seen that the correlation features of object B are obviously different from the correlation features of objects A, C and D, accordingly the confidence level of object B is set as a relatively low value. For example, the confidence level of correlation between the high-priority objects may be calculated as follows.

$$P\_confidence\_cov(B) = k \times exp(-mean(Cov(AB), Cov(BC),$$
$$Cov(BD)) / max(Cov(AB), Cov(BC), Cov(CD), Cov(AC), Cov(AD), Cov(BD)))$$
$$formula\ (4)$$

Or the confidence level may be simply written as follows.

$$P\_confidence\_cov(B) = k \times exp(-mean(COV(BX)) /$$
$$max(COV(XX))) \qquad formula\ (5)$$

Here, k is a weighting coefficient. X represents any one of A, B, C and D.

Similarly, -mean(Cov(AB), Cov(BC), Cov(BD)) / max(Cov(AB), Cov(BC), Cov(CD), Cov(AC), Cov(AD), Cov(BD)) or -mean(COV(BX)) / max(COV(XX)) may represent the second variability of the variations of at least one second feature of relative distance d, relative angle I, and relative movement velocity m between the high-priority object and another high-priority object. The second confidence level P_confidence_cov(B) is in inversely proportional relationship to the second variability; namely, the smaller the second variability is, the larger the second confidence level is. For example, in formula (4), the smaller -mean(Cov(AB), Cov(BC), Cov(BD)) / max(Cov(AB), Cov(BC), Cov(CD), Cov(AC), Cov(AD), Cov(BD)) is, the larger exp(-mean(Cov(AB), Cov(BC), Cov(BD)) / max(Cov(AB), Cov(BC), Cov(CD), Cov(AC), Cov(AD), Cov(BD))) is, and the larger the second confidence level is. As another example, in formula (5), the smaller -mean(COV(BX)) / max(COV(XX)) is, the larger exp(-mean(COV(BX)) / max(COV(XX))) is, and the larger the second confidence level is.

It should be noted that, according to the principle of variability, a formula other than above formulas (4) and (5) may also be constructed to represent the variability of the variances of the second feature (for example, using a variance (mathematical concept)), and a confidence level that is inversely proportional to the variability.

Additionally, the second confidence level is calculated using three second features here; however, the second confidence level may also be calculated using less than or more than three second features.

The reliable high-priority objects may be determined based on combination of the first and second confidence levels (for example, an overall confidence level is obtained using a sum, a weighted sum or an average value of the first and second confidence levels); and reliable priority may also be determined using only one confidence level. That is to say, the confidence levels may include the first confidence level, the second confidence level, and/or the combination of the first and second confidence levels. Additionally, the concept of the confidence level may be not considered, and the reliable high-priority objects may be directly determined by considering only the variability of the first feature and/or the second feature. The description thereof is omitted here.

It should be noted that, the specific representation method is not limited the above formulas, and the specific evaluation features are not limited to the above features.

A state conversion may be performed based on the calculated confidence level of priority state of the obtained objects and a predetermined threshold. For example, the obtained confidence level of high-priority object A is 80, and the predetermined confidence threshold for retaining the high-priority objects is 50 (namely greater than or equal to 50), then object A will be retained in a high-priority state to be tracked, as the reliable high-priority object.

The high-priority objects whose confidence level is less than the predetermined threshold may be abandoned, as the non-high-priority objects.

It should be noted that, for non-high-priority objects, the state confidence level thereof may also be calculated. Here, the calculation may use only the historical information of the object itself, as shown in formulas (2) and (3). That is to say, first variability of variations of at least one first feature of a position, a velocity, a distance, and an occupation region of each of non-high-priority objects other than the high-priority objects among a plurality of continuous frames are determined; a confidence level is determined based on the first variability; and the non-high-priority objects whose confidence level is greater than or equal to a predetermined threshold are determined as the high-priority objects. The smaller the first variability is, the larger the confidence level is. Thus, when the state confidence level of a non-high-priority object is greater than the predetermined threshold, the non-high-priority object may be updated as a high-priority object. In this way, the priority state and the confidence level of the tracking object can be obtained in real time, and the conversion between the high-priority object and the non-priority object can be performed in appropriate circumstances. After the state conversion, a tracking result of all tracking objects may be output, and object tracking of a new frame may be restarted using a newest priority states.

In this way, after initializing the tracking apparatus, all objects that just come into the tracking apparatus may be set as low-priority objects (namely, non-high-priority objects), and then the priority states of these objects may be gradually converted by observing a detection result and an obtained state confidence levels. A low-priority object may be converted into a high-priority object; and high-priority object may be converted into a low-priority object since the confidence level is too low. In this way, as the tracking is performed, the high-priority objects can be continuously updated, and a more accurate tracking can be performed using the updated high-priority objects.

In an example, after the reliable high-priority objects are obtained, movement state of a tracker may also be estimated, based on movement states of the reliable high-priority objects; and the objects to be tracked other than the reliable high-priority objects may be tracked, based on the movement state of the tracker.

In this way, the movement information of a camera of the tracker in a current frame can be estimated based on a tracking result of the reliable high-priority objects. Here, point matching based on an optical flow method may be used, or inter-frame movement information may be calculated using a simple mean shift calculating method. By obtaining the inter-frame movement information, objects with another priority can be accurately estimated and detected, and tracking performance can be optimized and improved. For example, if all of the tracked reliable high-priority objects turn to the right (namely, the tracking objects of the current frame are detected on the right side of the tracking objects of the previous frame), then it may be estimated that the movement of the camera of the tracker in the current frame with respect to the tracking objects may turn to the left; accordingly, the tracking objects of the current frame may also be detected on the right side of the tracking objects of the previous frame when tracking other objects. In this way, the object with another priority can be accurately estimated and detected, and the tracking performance of all objects can be optimized and improved.

It should be noted that, after the reliable high-priority objects are obtained, another adjustment and operation may also be performed. For example, more system resources are allocated to tracking for the reliable high-priority objects, compared to tracking for the objects to be tracked other than the reliable high-priority objects; however, the present invention is not limited such an example. In this way, the system resources can be rationally allocated, so that the reliable high-priority objects can be reliably tracked, and the tracking performance of other objects can be further optimized and improved based on tracking information of the reliable high-priority objects without increasing the system resources.

It should be noted that, the method for tracking other objects is similar to the tracking of the high-priority objects; and a common tracking detection method, such as the tracking method based on detection as shown in FIG. 3 may be applied. And then, state priorities of all objects are evaluated using the object tracking result of the current frame. In this way, as the tracking is performed, the high-priority states of the objects can be constantly updated, and the tracking performance of the reliable high-priority objects and other objects can be constantly optimized and improved.

FIG. 7 is a block diagram illustrating an object tracking apparatus 700 according to another embodiment of the present invention.

As shown in FIG. 7, the object tracking apparatus 700 includes: a high-priority object determining unit 701 configured to select, from the objects to be tracked, objects which are located right in front of the apparatus, stably move, and continuously appear, as high-priority objects; a reliable high-priority object determining unit 702 configured to select, from the high-priority objects, high-priority objects whose movement is continuous and stable, and coincides with movement of another high-priority object, as reliable high-priority objects; and a tracking unit 703 configured to track the reliable high-priority objects.

Thus, the apparatus can obtain an accurate and stable tracking result by determining the high-priority objects and the reliable high-priority objects.

In an example, the reliable high-priority object determining unit 701 may calculate a variation of at least one first feature of a position, a velocity, a distance, and an occupation region of each object between two frames; and determine the objects whose variation of the at least one first feature is less than a corresponding predetermined threshold, as the high-priority objects.

Here, the first feature may include a spatial position, a movement velocity, a distance from the tracker (namely, a distance from a camera installed in the tracker), and/or an occupation region in an image photographed by the camera (for example, a front region in a height-width plane); however, the first feature is not limited to the above features, and for example, may include a movement velocity only in a depth direction (namely a forward speed), a depth distance in the depth direction, a position in the height-width plane (namely a front position) and the like.

Moreover, for an initialized tracking object, such an object may be set as a non-high-priority (or low-priority) object, since such an object belongs to a new object and the priority state of such an object cannot be analyzed using historical data. As capture and tracking are continuously performed for continuous frames, an analysis may be performed for a variation of at least one first feature of a position, a velocity, a distance, and an occupation region of the tracking object between two (or among three or more) continuous (or discontinuous) frames. If the variation is relatively small, it means that the position, the velocity, the distance and/or the occupation region of the tracking object is basically unchanged, namely stable; accordingly, the object may be initially selected as the high-priority object.

In an example, the reliable high-priority object determining unit 702 may determine first variability of variations of at least one first feature of a position, a velocity, a distance, and an occupation region of each high-priority object among a plurality of frames; determine second variability of variations of at least one second feature of a relative distance, a relative angle, and a relative movement velocity between the high-priority object and another high-priority object; determine a confidence level based on at least one of the first variability and the second variability; and retain the high-priority objects whose confidence level is greater than or equal to a predetermined threshold, as the reliable high-priority objects. The smaller the at least one of the first variability and the second variability is, the larger the confidence level is.

The high-priority objects may become unstably moved and/or separated from a movement track of another high-priority object as time passed thereby becoming unreliable high-priority objects. Thus, such unreliable high-priority objects cannot be determined as stable tracking objects, since the movement of such objects is unstable and independent. On the other hand, for the reliable high-priority objects whose movement is continuous and stable, and basically coincides with movement track of another high-priority object as time passed (for example, a relative distance, a relative angle, and/or a relative movement velocity basically remain unchanged), a stable tracking result can be obtained when continuously tracking the reliable high-priority objects.

Accordingly, own historical information (such as the at least one first feature of the position, the velocity, the distance, and the occupation region) and coexistence information between objects of a current frame (such as the at least one second feature of the relative distance, the relative angle, and the relative movement velocity between the object and another object) may be used to calculate a state confidence level of each high-priority object.

In an example, the high-priority object determining unit 701 may further determine first variability of variations of at least one first feature of a position, a velocity, a distance, and an occupation region of each of non-high-priority objects other than the high-priority objects among a plurality of continuous frames; determine a confidence level based on the first variability; and determine the non-high-priority objects whose confidence level is greater than or equal to a predetermined threshold, as the high-priority objects. The smaller the first variability is, the larger the confidence level is.

In an example, the high-priority object determining unit 701 may further determine the high-priority objects whose confidence level is less than the predetermined threshold, as the non-high-priority objects.

The apparatus can evaluate whether the high-priority objects are reliable and perform the state conversion between high-priority and non-high-priority, based on a real-time tracking result.

In an example, the tracking unit 703 may estimate, based on movement states of the reliable high-priority objects, movement state of a tracker; and track, based on the movement state of the tracker, the objects to be tracked other than the reliable high-priority objects.

In this way, after initializing the tracking apparatus, all objects that just come into the tracking apparatus may be set as low-priority objects (namely, non-high-priority objects), and then the priority states of these objects may be gradually converted by observing a detection result and an obtained state confidence levels. A low-priority object may be converted into a high-priority object; and high-priority object may be converted into a low-priority object since the confidence level is too low. In this way, as the tracking is performed, the high-priority objects can be continuously updated, and a more accurate tracking can be performed using the updated high-priority objects.

In an example, more system resources may be allocated to tracking for the reliable high-priority objects, compared to tracking for the objects to be tracked other than the reliable high-priority objects.

In this way, the system resources can be rationally allocated, so that the reliable high-priority objects can be reliably tracked, and the tracking performance of other objects can be further optimized and improved based on tracking information of the reliable high-priority objects without increasing the system resources.

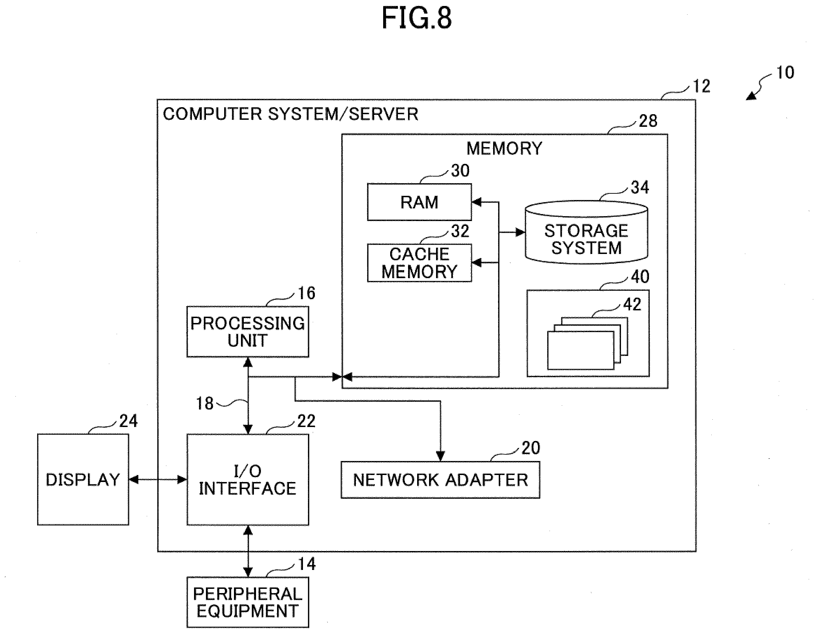

FIG. 8 is a block diagram illustrating an example of a computer system or a server 12 for implementing the embodiments of the present invention. The computer system or server 12 is just an example, and the function and use range of the embodiments of the present invention is not limited to this example.

As shown in FIG. 8, the computer system or server 12 is expressed in the form of a general-purpose computer device. The components of the computer system or server 12 may include and be not limited to one or more processors or processing units 16, a system memory 28, and a bus 18 for connecting other system components.

The bus 18 means one or more structures of some bus structures, such as a memory bus or a memory controller, a peripheral bus, an accelerated graphics port, a processor or a local bus using any bus structure of some bus structures.

The computer system or server 12 typically includes a plurality of computer system readable media. These media may be any usable media that can be accessed by the computer system or server 12, such as volatile and non-volatile media, and movable and non-movable media.

The system memory 28 may include a computer system readable medium of the form of a volatile memory, such as a random access memory (RAM) 30 and/or a cache memory 32. The computer system or server 12 may further include other movable/non-movable, or volatile/non-volatile computer system storage media. Although not shown in FIG. 12, a magnetic disk drive for reading or writing a movable and non-volatile disk (such as a "floppy disk"), and an optical disk drive for reading or writing a movable and non-volatile optical disk (such as a CD-ROM, a DVD-ROM or other optical media) may be provided. In this case, each drive may be connected to the bus 18 via one or more data media interfaces. The memory 28 may include at least one instruction, which is configured to execute the functions of the embodiments of the present invention.

A program/application tool 40 having a set of (at least one) program module 42 may be stored in the memory 28. The program module 42 includes and is not limited to an operation system, one or more application programs, other program modules and program data, and each one or combination of these examples may include implementation of a network environment. The program model 42 usually executes the functions and/or methods in the embodiments of the present invention.

The computer system or server 12 may also communicate with one or more external equipment sets 14 (such as a keyboard, a pointing device, and a display), may also communicate with one or more devices for making a user interact with the computer system or server 12, and/or may also communicate with any device (such as a network card, or a modem) for making the computer system or server 12 communicate with one or more other computer devices. The communication may be performed via an input/output (I/O) interface 22. Furthermore, the computer system or server 12 may also communicate with one or more networks (such as a local area network (LAN), a wide area network (WAN) and/or a public network, i.e., the Internet) via a network adapter 20.

It should be noted that, although not shown in FIG. 12, the computer system or server 12 may use other hardware and/or software modules, which include and are not limited to micro codes, a device drive, a redundant processing unit, an external magnetic disk drive array, a RAID system, a tape drive and a data backup storage system.

The steps or apparatuses of the present invention are described above. The above descriptions of the embodiments are just examples, and various modifications, replacements or combinations may be made without departing from the scope of the present invention, as defined by the appended claims, by persons skilled in the art.

The steps of the above method may be performed by any appropriate means that can perform the corresponding functions. The means may include any components and/or modules of hardware and/or software, and include but not be limited to a circuit, a dedicated application-specific integrated circuit (ASIC) or a processor.

The present invention may use a general-purpose processor, a digital signal processor (DSP), an ASIC, a field programmable gate array (FPGA) or other programmable logic device (PLD), a discrete gate or transistor logic, discrete hardware components or any other combination for executing the functions to realize the logic blocks, modules and circuits of the embodiments. The general-purpose processor is a micro-processor, and alternatively, the processor may be any processors, controllers, micro-controllers or state machines that can be obtained commercially. The processor may also be the combination of the computer equipment, such as the combination of a DSP and a micro-processor, the combination of plural micro-processors, or the combination of a DSP and plural micro-processors.

The steps of the method according to the present invention may be incorporated in the hardware, software modules executed by a processor or the combination of these two directly. The software modules may be stored in a recording medium with any shape. The examples of the recording medium includes a random access memory (RAM), a read-only memory (ROM), a flash memory, an EPROM memory, an EEPROM memory, a register, a hard disk drive, a removable disk, a CD-ROM, etc. The recording medium may be linked to a processor so that the processor reads information from the recording medium or writes information into the recording medium. Alternatively, the recording medium and the processor may also be a whole apparatus. The software module may be a single command or many commands, and may be distributed in several code segments, different programs or plural recording media.

Steps of the above method may be performed in time order, however the performing sequence is not limited to the time order. Any steps may be performed in parallel.

The functions may be realized by hardware, software, firmware or any combination thereof. When the function is implemented by software, the function may be stored in a computer-readable medium as one or more commands. The recording medium may be any real medium that can be accessed by a computer. Such a computer-readable medium includes a RAM, a ROM, an EEPROM, a CD-ROM or other laser discs, a magnetic disk or other magnetic memory, or any other real media that carry or store commands, data or program codes and are accessed by the computer. Such disk and disc include a CD, a laser disc, an optical disc, a DVD disc, a floppy disk and a blue-ray disc, and the disk usually reproduces data and the disc reproduces data by a laser.

Thus, the operations may be performed by a computer program product. For example, such computer program product may be a tangible medium where computer-readable commands are stored (or coded), and the commands may be executed by one or more processors to perform the operation. The computer program product may include packaging material.

The software or commands may also be transmitted by a transmission medium. For example, a coaxial cable, an optical cable, a twisted cable, a digital subscriber line (DSL), or a transmission medium of the wireless technology of infrared, wireless or microwave may be used to transmit the software from a website, a server or another remote source.

Additionally, the modules and/or other appropriate means of the method or technology may be obtained from a user terminal and/or base station, or by other methods. For example, such equipment may be connected to a server so as to perform the transmission of the means of the above method. Alternatively, the methods may be provided via a storage unit (for example, a physical storage medium such as a RAM, a ROM, a CD or a floppy disc), so that the user terminal and/or the base station can obtain the methods when it is connected to the equipment. Furthermore, any other appropriate technology may be provided to the equipment by the method.

The above functions may be implemented by a processor, hardware, software, firmware, hard-wire or any combination thereof. The features for implementing the functions may be located at any physical position where which is distributed to each position physically.

Various modifications, replacements or combinations may be made without departing from the scope of the present invention, as defined by the appended claims, by persons skilled in the art.

## Claims

1. A computer implemented method for visual tracking of objects to be tracked over multiple frames of images photographed by a camera, the method comprising:

   selecting (201), from the objects to be tracked, non-high-priority objects and high-priority objects, wherein the high-priority objects are located right in front of an object tracking apparatus and move continuously and stably, such that a temporal variation over said multiple frames of a feature extracted for the objects to be tracked remains below a predetermined threshold;
   selecting (202), from the high-priority objects, high-priority objects whose movement coincides with movement of another high-priority object, as reliable high-priority objects; and
   tracking (203) the reliable high-priority objects,
   wherein selecting (202) the reliable high-priority objects includes
   determining (2021) first variability of variations of at least one first feature of a position, a velocity, a distance from the tracker's camera, and an occupation region in the image photographed by the camera of each high-priority object among a plurality of continuous frames;
   determining (2022) second variability of variations of at least one second feature of a relative distance, a relative angle, and a relative movement velocity between the high-priority object and another high-priority object;
   determining (2023) a confidence level based on at least one of the first variability and the second variability; and
   retaining (2024) the high-priority objects whose confidence level is greater than or equal to a predetermined threshold, as the reliable high-priority objects and converting a high-priority object into a non-high priority object if its confidence level is lower than the confidence level required for a high priority object, such that the high-priority objects are continuously updated as the tracking is performed,
   wherein the smaller the at least one of the first variability and the second variability is, the larger the confidence level is.

2. The method for tracking objects according to claim 1, further comprising for the non-high-priority objects:

   determining the first variability of variations of at least one first feature of a position, a velocity, a distance, and an occupation region of each non-high-priority object other than the high-priority objects among a plurality of continuous frames;
   determining a confidence level based on the first variability; and
   wherein the non-high-priority objects whose confidence level is greater than or equal to a predetermined threshold are determined as high-priority objects.

3. The method for tracking objects according to claim 1,

wherein selecting (201) the high-priority objects includes
calculating (2011) a variation of at least one first feature of a position, a velocity, a distance from the tracker's camera, and an occupation region in the image photographed by the camera of each object between two frames; and
determining (2012) the objects whose variation of the at least one first feature is less than a corresponding predetermined threshold, as the high-priority objects.

4. The method for tracking objects according to claim 1 or 3, the method further comprising:

determining first variability of variations of at least one first feature of a position, a velocity, a distance from the tracker's camera, and an occupation region in the image photographed by the camera of each of non-high-priority objects other than the high-priority objects among a plurality of continuous frames;
determining a confidence level based on the first variability; and
determining the non-high-priority objects whose confidence level is greater than or equal to a predetermined threshold, as the high-priority objects,
wherein the smaller the first variability is, the larger the confidence level is.

5. The method for tracking objects according to claim 1 or 4, the method further comprising:
determining the high-priority objects whose confidence level is less than a predetermined threshold, as the non-high-priority objects.

6. The method for tracking objects according to any one preceding claim, the method further comprising:

estimating, based on movement states of the reliable high-priority objects, movement state of a tracker; and
tracking, based on the movement state of the tracker, the objects to be tracked other than the reliable high-priority objects.

7. The method for tracking objects according to any one preceding claim,
wherein more system resources are allocated to tracking for the reliable high-priority objects, compared to tracking for the objects to be tracked other than the reliable high-priority objects.

8. An apparatus (700) for visual tracking of objects to be tracked over multiple frames of images photographed by a camera, the apparatus comprising:

a high-priority object determining unit (701) configured to select, from the objects to be tracked, non-high-priority objects and high-priority objects, wherein the high-priority objects are located right in front of the apparatus (700) and move continuously and stably, such that a temporal variation over said multiple frames of a feature extracted for the tracked objects to be tracked remains below a predetermined thresholds;
a reliable high-priority object determining unit (702) configured to select, from the high-priority objects, high-priority objects whose movement coincides with movement of another high-priority object, as reliable high-priority objects; and
a tracking unit (703) configured to track the reliable high-priority objects
wherein the reliable high-priority object determining unit (702)
calculates a variation of at least one first feature of a position, a velocity, a distance from the tracker's camera, and an occupation region in the image photographed by the camera of each object between two frames; and
determines the objects whose variation of the at least one first feature is less than a corresponding predetermined threshold, as the high-priority objects,
wherein the reliable high-priority object determining unit (702)
determines first variability of variations of at least one first feature of a position, a velocity, a distance from the tracker's camera, and an occupation region in the image photographed by the camera of each high-priority object among a plurality of frames;
determines second variability of variations of at least one second feature of a relative distance, a relative angle, and a relative movement velocity between the high-priority object and another high-priority object;
determines a confidence level based on at least one of the first variability and the second variability; and
retains the high-priority objects whose confidence level is greater than or equal to a predetermined threshold, as the reliable high-priority objects, and converting a high-priority object into a non-high priority object if its confidence level is lower than the confidence level required for a high priority object, such that the high-priority objects are continuously updated as the tracking is performed,
wherein the smaller the at least one of the first variability and the second variability is, the larger the confidence level is.

**Patentansprüche**

1. Computerimplementiertes Verfahren zum visuellen Verfolgen von Objekten, die über mehrere Rahmen von durch eine Kamera fotografierten Bildern zu verfolgen sind, das Verfahren umfassend:

Auswählen (201), aus den zu verfolgenden Objekten, von Objekten nicht hoher Priorität und Objekten hoher Priorität, wobei die Objekte hoher Priorität genau vor einer Objektverfolgungsvorrichtung angeordnet sind und sich kontinuierlich und stabil bewegen, so dass eine zeitliche Variation über die mehreren Rahmen eines für die zu verfolgenden Objekten extrahierten Merkmals unter einem im Voraus bestimmten Schwellenwert bleibt;
Auswählen (202), aus den Objekten hoher Priorität, von Objekten hoher Priorität, deren Bewegung mit der Bewegung eines anderen Objekts hoher Priorität übereinstimmt, als zuverlässige Objekte hoher Priorität; und
Verfolgen (203) der zuverlässigen Objekte hoher Priorität;
wobei Auswählen (202) der zuverlässigen Objekte hoher Priorität enthält
Bestimmen (2021) einer ersten Variabilität von Variationen mindestens eines ersten Merkmals einer Position, einer Geschwindigkeit, einer Distanz von der Kamera des Verfolgers und einer Belegungsregion in dem durch die Kamera fotografierten Bild jedes Objekts hoher Priorität unter einer Vielzahl von aufeinanderfolgenden Rahmen;
Bestimmen (2022) einer zweiten Variabilität von Variationen mindestens eines zweiten Merkmals einer relativen Distanz, eines relativen Winkels und einer relativen Bewegungsgeschwindigkeit zwischen dem Objekt hoher Priorität und einem anderen Objekt hoher Priorität;
Bestimmen (2023) eines Konfidenzniveaus basierend auf mindestens einer der ersten Variabilität und der zweiten Variabilität; und
Beibehalten (2024) der Objekte hoher Priorität, deren Konfidenzniveau größer als ein oder gleich einem im Voraus bestimmten Schwellenwert ist, als die zuverlässigen Objekte hoher Priorität und Umwandeln eines Objekts hoher Priorität in ein Objekt nicht hoher Priorität, wenn sein Konfidenzniveau niedriger ist als das für ein Objekt hoher Priorität erforderliche Konfidenzniveau, so dass die Objekte hoher Priorität kontinuierlich aktualisiert werden, während das Verfolgen durchgeführt wird,
wobei, je kleiner die mindestens eine der ersten Variabilität und der zweiten Variabilität ist, desto größer das Konfidenzniveau ist.

2. Verfahren zum Verfolgen von Objekten nach Anspruch 1, ferner umfassend für die Objekte nicht hoher Priorität:

Bestimmen der ersten Variabilität von Variationen mindestens eines ersten Merkmals einer Position, einer Geschwindigkeit, einer Distanz und einer Belegungsregion jedes Objekts nicht hoher Priorität außer den Objekten hoher Priorität unter einer Vielzahl von aufeinanderfolgenden Rahmen;
Bestimmen eines Konfidenzniveaus basierend auf der ersten Variabilität; und
wobei die Objekte nicht hoher Priorität, deren Konfidenzniveau größer als ein oder gleich einem im Voraus bestimmten Schwellenwert ist, als Objekte hoher Priorität bestimmt werden.

3. Verfahren zum Verfolgen von Objekten nach Anspruch 1,
wobei Auswählen (201) der Objekte hoher Priorität enthält
Berechnen (2011) einer Variation mindestens eines ersten Merkmals einer Position, einer Geschwindigkeit, einer Distanz von der Kamera des Verfolgers und einer Belegungsregion in dem durch die Kamera fotografierten Bild jedes Objekts zwischen zwei Rahmen; und
Bestimmen (2012) der Objekte, deren Variation des mindestens einen ersten Merkmals kleiner ist als ein korrespondierender im Voraus bestimmter Schwellenwert, als die Objekte hoher Priorität.

4. Verfahren zum Verfolgen von Objekten nach Anspruch 1 oder 3, das Verfahren ferner umfassend:

Bestimmen einer ersten Variabilität von Variationen mindestens eines ersten Merkmals einer Position, einer Geschwindigkeit, einer Distanz von der Kamera des Verfolgers und einer Belegungsregion in dem durch die Kamera fotografierten Bild jedes von Objekten nicht hoher Priorität außer den Objekten hoher Priorität unter einer Vielzahl von aufeinanderfolgenden Rahmen;

Bestimmen eines Konfidenzniveaus basierend auf der ersten Variabilität; und

Bestimmen der Objekte nicht hoher Priorität, deren Konfidenzniveau größer als ein oder gleich einem im Voraus bestimmten Schwellenwert ist, als die Objekte hoher Priorität,

wobei, je kleiner die erste Variabilität ist, desto größer das Konfidenzniveau ist.

5. Verfahren zum Verfolgen von Objekten nach Anspruch 1 oder 4, das Verfahren ferner umfassend:
Bestimmen der Objekte hoher Priorität, deren Konfidenzniveau kleiner als ein im Voraus bestimmter Schwellenwert ist, als die Objekte nicht hoher Priorität.

6. Verfahren zum Verfolgen von Objekten nach einem der vorstehenden Ansprüche, das Verfahren ferner umfassend:

Schätzen, basierend auf Bewegungszuständen der zuverlässigen Objekte hoher Priorität, des Bewegungszustands eines Verfolgers; und

Verfolgen, basierend auf dem Bewegungszustand des Verfolgers, der Objekte, die zu verfolgen sind, außer den zuverlässigen Objekten hoher Priorität.

7. Verfahren zum Verfolgen von Objekten nach einem der vorstehenden Ansprüche,
wobei zum Verfolgen für die zuverlässigen Objekte hoher Priorität mehr Systembetriebsmittel zugeteilt werden im Vergleich mit dem Verfolgen für die Objekte, die außer den zuverlässigen Objekten hoher Priorität zu verfolgen sind.

8. Vorrichtung (700) zum visuellen Verfolgen von Objekten, die über mehrere Rahmen von durch eine Kamera fotografierten Bildern zu verfolgen sind, die Vorrichtung umfassend:

eine Einheit zum Bestimmen von Objekten hoher Priorität (701), konfiguriert zum Auswählen, aus den zu verfolgenden Objekten, von Objekten nicht hoher Priorität und Objekten hoher Priorität, wobei die Objekte hoher Priorität genau vor der Vorrichtung (700) angeordnet sind und sich kontinuierlich und stabil bewegen, so dass eine zeitliche Variation über die mehreren Rahmen eines für die verfolgten Objekte, die zu verfolgen sind, extrahierten Merkmals unter einem im Voraus bestimmten Schwellenwert bleibt;

eine Einheit zum Bestimmen zuverlässiger Objekte hoher Priorität (702), konfiguriert zum Auswählen, aus den Objekten hoher Priorität, von Objekten hoher Priorität, deren Bewegung mit der Bewegung eines anderen Objekts hoher Priorität übereinstimmt, als zuverlässige Objekte hoher Priorität; und

eine Verfolgungseinheit (703), konfiguriert zum Verfolgen der zuverlässigen Objekte hoher Priorität;

wobei die Einheit zum Bestimmen zuverlässiger Objekte hoher Priorität (702)

eine Variation mindestens eines ersten Merkmals einer Position, einer Geschwindigkeit, einer Distanz von der Kamera des Verfolgers und einer Belegungsregion in dem durch die Kamera fotografierten Bild jedes Objekts zwischen zwei Rahmen berechnet; und

die Objekte, deren Variation des mindestens einen ersten Merkmals kleiner ist als ein korrespondierender im Voraus bestimmter Schwellenwert, als die Objekte hoher Priorität bestimmt,

wobei die Einheit zum Bestimmen zuverlässiger Objekte hoher Priorität (702)

eine erste Variabilität von Variationen mindestens eines ersten Merkmals einer Position, einer Geschwindigkeit, einer Distanz von der Kamera des Verfolgers und einer Belegungsregion in dem durch die Kamera fotografierten Bild jedes Objekts hoher Priorität unter einer Vielzahl von Rahmen bestimmt;

eine zweite Variabilität von Variationen mindestens eines zweiten Merkmals einer relativen Distanz, eines relativen Winkels und einer relativen Bewegungsgeschwindigkeit zwischen dem Objekt hoher Priorität und einem anderen Objekt hoher Priorität bestimmt;

ein Konfidenzniveau basierend auf mindestens einer der ersten Variabilität und der zweiten Variabilität bestimmt; und

die Objekte hoher Priorität, deren Konfidenzniveau größer als ein oder gleich einem im Voraus bestimmten Schwellenwert ist, als die zuverlässigen Objekte hoher Priorität beibehält und ein Objekt hoher Priorität in ein Objekt nicht hoher Priorität umwandelt, wenn sein Konfidenzniveau niedriger ist als das für ein Objekt hoher Priorität erforderliche Konfidenzniveau, so dass die Objekte hoher Priorität kontinuierlich aktualisiert werden, während das Verfolgen durchgeführt wird,

wobei, je kleiner die mindestens eine der ersten Variabilität und der zweiten Variabilität ist, desto größer das Konfidenzniveau ist.

**EP 3 121 791 B1**

**Revendications**

1. Procédé mis en oeuvre par ordinateur pour le suivi visuel d'objets qui doivent être suivis sur de multiples photogrammes d'images qui sont photographiées par une caméra, le procédé comprenant :

   la sélection (201), parmi les objets qui doivent être suivis, d'objets ne présentant pas de priorité élevée et d'objets présentant une priorité élevée, dans lequel les objets présentant une priorité élevée sont localisés juste à l'avant d'un appareil de suivi d'objet et ils se déplacent en continu et de façon stable, de telle sorte qu'une variation temporelle sur lesdits multiples photogrammes d'une caractéristique qui est extraite pour les objets qui doivent être suivis reste en deçà d'un seuil prédéterminé ;
   la sélection (202), parmi les objets présentant une priorité élevée, d'objets présentant une priorité élevée dont le déplacement coïncide avec le déplacement d'un autre objet présentant une priorité élevée, en tant qu'objets présentant une priorité élevée fiables ; et
   le suivi (203) des objets présentant une priorité élevée fiables ;
   dans lequel la sélection (202) des objets présentant une priorité élevée fiables inclut :

   la détermination (2021) d'une première variabilité de variations d'au moins une première caractéristique constituée par une position, une vitesse, une distance par rapport à la caméra du dispositif de suivi et une région d'occupation dans l'image qui est photographiée par la caméra de chaque objet présentant une priorité élevée parmi une pluralité de photogrammes continus ;
   la détermination (2022) d'une seconde variabilité de variations d'au moins une seconde caractéristique constituée par une distance relative, un angle relatif et une vitesse de déplacement relative entre l'objet présentant une priorité élevée et un autre objet présentant une priorité élevée ;
   la détermination (2023) d'un niveau de confiance sur la base d'au moins une variabilité prise parmi la première variabilité et la seconde variabilité ; et
   la retenue (2024) des objets présentant une priorité élevée dont le niveau de confiance est supérieur ou égal à un seuil prédéterminé en tant qu'objets présentant une priorité élevée fiables et la conversion d'un objet présentant une priorité élevée en un objet ne présentant pas de priorité élevée si son niveau de confiance est inférieur au niveau de confiance qui est requis pour un objet présentant une priorité élevée, de telle sorte que les objets présentant une priorité élevée soient mis à jour en continu lorsque le suivi est réalisé ;

   dans lequel plus l'au moins une variabilité prise parmi la première variabilité et la seconde variabilité est faible, plus le niveau de confiance est élevé.

2. Procédé pour suivre des objets selon la revendication 1, comprenant en outre, pour les objets ne présentant pas de priorité élevée :

   la détermination de la première variabilité de variations d'au moins une première caractéristique constituée par une position, une vitesse, une distance et une région d'occupation de chaque objet ne présentant pas de priorité élevée autre que les objets présentant une priorité élevée pris parmi une pluralité de photogrammes continus ;
   la détermination d'un niveau de confiance sur la base de la première variabilité ; et
   dans lequel les objets ne présentant pas de priorité élevée dont le niveau de confiance est supérieur ou égal à un seuil prédéterminé sont déterminés en tant qu'objets présentant une priorité élevée.

3. Procédé pour suivre des objets selon la revendication 1,
   dans lequel la sélection (201) des objets présentant une priorité élevée inclut :

   le calcul (2011) d'une variation d'au moins une première caractéristique constituée par une position, une vitesse, une distance par rapport à la caméra du dispositif de suivi et une région d'occupation dans l'image qui est photographiée par la caméra de chaque objet entre deux photogrammes ; et
   la détermination (2012) des objets dont la variation de l'au moins une première caractéristique est inférieure à un seuil prédéterminé correspondant, en tant qu'objets présentant une priorité élevée.

4. Procédé pour suivre des objets selon la revendication 1 ou 3, le procédé comprenant en outre :

   la détermination d'une première variabilité de variations d'au moins une première caractéristique constituée par une position, une vitesse, une distance par rapport à la caméra du dispositif de suivi et une région d'occupation dans l'image qui est photographiée par la caméra de chacun des objets ne présentant pas de priorité élevée autres que les objets présentant une priorité élevée pris parmi une pluralité de photogrammes continus ;
la détermination d'un niveau de confiance sur la base de la première variabilité ; et
la détermination des objets ne présentant pas de priorité élevée dont le niveau de confiance est supérieur ou égal à un seuil prédéterminé en tant qu'objets présentant une priorité élevée ;
dans lequel plus la première variabilité est faible, plus le niveau de confiance est élevé.

5. Procédé pour suivre des objets selon la revendication 1 ou 4, le procédé comprenant en outre :
la détermination des objets présentant une priorité élevée dont le niveau de confiance est inférieur à un seuil prédéterminé en tant qu'objets ne présentant pas de priorité élevée.

6. Procédé pour suivre des objets selon l'une quelconque des revendications qui précèdent, le procédé comprenant en outre :

l'estimation, sur la base d'états de déplacement des objets présentant une priorité élevée fiables, d'un état de déplacement d'un dispositif de suivi ; et
le suivi, sur la base de l'état de déplacement du dispositif de suivi, des objets qui doivent être suivis autres que les objets présentant une priorité élevée fiables.

7. Procédé pour suivre des objets selon l'une quelconque des revendications qui précèdent,
dans lequel plus de ressources système sont allouées au suivi pour les objets présentant une priorité élevée fiables, par comparaison avec le suivi pour les objets qui doivent être suivis autres que les objets présentant une priorité élevée fiables.

8. Appareil (700) pour le suivi visuel d'objets qui doivent être suivis sur de multiples photogrammes d'images qui sont photographiées par une caméra, l'appareil comprenant :

une unité de détermination d'objets présentant une priorité élevée (701) qui est configurée de manière à sélectionner, parmi les objets qui doivent être suivis, des objets ne présentant pas de priorité élevée et des objets présentant une priorité élevée, dans lequel les objets présentant une priorité élevée sont localisés juste à l'avant de l'appareil (700) et ils se déplacent en continu et de façon stable, de telle sorte qu'une variation temporelle sur lesdits multiples photogrammes d'une caractéristique qui est extraite pour les objets suivis qui doivent être suivis reste en deçà d'un seuil prédéterminé ;
une unité de détermination d'objets présentant une priorité élevée fiables (702) qui est configurée de manière à sélectionner, parmi les objets présentant une priorité élevée, des objets présentant une priorité élevée dont le déplacement coïncide avec le déplacement d'un autre objet présentant une priorité élevée, en tant qu'objets présentant une priorité élevée fiables ; et
une unité de suivi (703) qui est configurée de manière à suivre les objets présentant une priorité élevée fiables ;
dans lequel l'unité de détermination d'objets présentant une priorité élevée fiables (702) :

calcule une variation d'au moins une première caractéristique constituée par une position, une vitesse, une distance par rapport à la caméra du dispositif de suivi et une région d'occupation dans l'image qui est photographiée par la caméra de chaque objet entre deux photogrammes ; et
détermine les objets dont la variation de l'au moins une première caractéristique est inférieure à un seuil prédéterminé correspondant, en tant qu'objets présentant une priorité élevée ;

dans lequel l'unité de détermination d'objets présentant une priorité élevée fiables (702) :

détermine une première variabilité de variations d'au moins une première caractéristique constituée par une position, une vitesse, une distance par rapport à la caméra du dispositif de suivi et une région d'occupation dans l'image qui est photographiée par la caméra de chaque objet présentant une priorité élevée parmi une pluralité de photogrammes ;
détermine une seconde variabilité de variations d'au moins une seconde caractéristique constituée par une distance relative, un angle relatif et une vitesse de déplacement relative entre l'objet présentant une priorité élevée et un autre objet présentant une priorité élevée ;
détermine un niveau de confiance sur la base d'au moins une variabilité prise parmi la première variabilité et la seconde variabilité ; et
retient les objets présentant une priorité élevée dont le niveau de confiance est supérieur ou égal à un seuil prédéterminé en tant qu'objets présentant une priorité élevée fiables et convertit un objet présentant une priorité élevée en un objet ne présentant pas de priorité élevée si son niveau de confiance est inférieur au niveau de confiance qui est requis pour un objet présentant une priorité élevée, de telle sorte que les objets présentant une priorité élevée soient mis à jour en continu lorsque le suivi est réalisé ;

dans lequel plus l'au moins une variabilité prise parmi la première variabilité et la seconde variabilité est faible, plus le niveau de confiance est élevé.

# FIG.1

# FIG.2

201

SELECT OBJECTS WHICH ARE LOCATED
RIGHT IN FRONT OF OBJECT TRACKING
APPARATUS, STABLY MOVE,
AND CONTINUOUSLY APPEAR,
AS HIGH-PRIORITY OBJECTS FROM
OBJECTS TO BE TRACKED

202

SELECT HIGH-PRIORITY OBJECTS WHOSE
MOVEMENT IS CONTINUOUS AND STABLE,
AND COINCIDES WITH MOVEMENT OF
ANOTHER HIGH-PRIORITY OBJECT,
AS RELIABLE HIGH-PRIORITY OBJECTS
FROM HIGH-PRIORITY OBJECTS

203

TRACK RELIABLE HIGH-PRIORITY OBJECTS

# FIG.3

301

ESTIMATE REGION-OF-INTEREST WHICH
MAY APPEAR IN NEW FRAME

302

DETECT OBJECTS IN REGION-OF-INTEREST
USING TARGET TEMPLATE OR MODEL

303

UPDATE TARGET TEMPLATE OR MODEL
USING DETECTION RESULT
OF CURRENT FRAME

# FIG.4

2011

CALCULATE VARIATION OF AT LEAST
ONE FIRST FEATURE OF POSITION,
VELOCITY, DISTANCE, AND OCCUPATION
REGION OF EACH OBJECT BETWEEN
TWO CONTINUOUS FRAMES

2012

DETERMINE OBJECTS WHOSE VARIATION OF
AT LEAST ONE FIRST FEATURE IS LESS
THAN CORRESPONDING PREDETERMINED
THRESHOLD, AS HIGH-PRIORITY OBJECTS

# FIG.5

2021

DETERMINE FIRST VARIABILITY OF
VARIATIONS OF AT LEAST ONE FIRST
FEATURE OF POSITION, VELOCITY,
DISTANCE, AND OCCUPATION REGION OF
EACH HIGH-PRIORITY OBJECT AMONG A
PLURALITY OF CONTINUOUS FRAMES

2022

DETERMINE SECOND VARIABILITY OF
VARIATIONS OF AT LEAST ONE SECOND
FEATURE OF RELATIVE DISTANCE,
RELATIVE ANGLE, AND RELATIVE
MOVEMENT VELOCITY BETWEEN
HIGH-PRIORITY OBJECT AND ANOTHER
HIGH-PRIORITY OBJECT

2023

DETERMINE CONFIDENCE LEVEL BASED ON
AT LEAST ONE OF FIRST VARIABILITY AND
SECOND VARIABILITY, WHEREIN THE
SMALLER AT LEAST ONE OF FIRST
VARIABILITY AND SECOND VARIABILITY IS,
THE LARGER CONFIDENCE LEVEL IS

2024

RETAIN HIGH-PRIORITY OBJECTS WHOSE
CONFIDENCE LEVEL IS GREATER THAN OR
EQUAL TO PREDETERMINED THRESHOLD,
AS RELIABLE HIGH-PRIORITY OBJECTS

# FIG.6

d(AB), I(AB), m(AB)
80mm, 19 degree, 104mmps

# FIG.7

# FIG.8

EP 3 121 791 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011052003 A1
- US 2007133840 A1

**Non-patent literature cited in the description**

- Learning Semantic Scene Models by Trajectory Analysis. **XIAOGANG WANG et al.** COMPUTER VISION - ECCV 200 LECTURE NOTES IN COMPUTER SCIENCE. LNCS SPRINGER, 2006, 110-123
- Collaborative Object Tracking with Motion Similarity Measure. **CHAN KAI-CHI et al.** IEEE INTERNATIONAL CONFERENCE ON ROBOTICS AND BIOMIMETICS (ROBIO). IEEE, 12 December 2013, 964-969
- Model Generation for Robust Object Tracking Based on Temporally Stable Regions. **BANERJEE P et al.** MOTION AND VIDEO COMPUTING, 2008. WMVC 2008. IEE WORKSHOP ON. IEE, 08 January 2008, 1-6